# EUROPEAN PATENT SPECIFICATION

(11) **EP 4 141 815 B1**
(45) Date of publication and mention of the grant of the patent: **30.04.2025**
(21) Application number: 21193333.8
(22) Date of filing: 26.08.2021
(51) Int. Cl.: G06V 20/56, G06V 10/56

(54) **METHOD AND DEVICE FOR DETERMINING A COLOR OF A SUBSTRATE BEING LATERALLY ADJACENT TO A NON-ELEVATED SURFACE OF A ROAD**
VERFAHREN UND VORRICHTUNG ZUR BESTIMMUNG EINER FARBE EINES SEITLICH AN EINE NICHT ERHÖHTE STRASSENOBERFLÄCHE ANGRENZENDEN SUBSTRATS
PROCÉDÉ ET DISPOSITIF DE DÉTERMINATION DE COULEUR DE SUBSTRAT SITUÉ LATÉRALEMENT ADJACENT À UNE SURFACE NON SURÉLEVÉE DE ROUTE

(43) Date of publication of application: 01.03.2023
(73) Proprietor: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(56) References cited:
- ISABELLE TANG ET AL: "Automatic Road Environment Classification", IEEE TRANSACTIONS ON INTELLIGENT TRANSPORTATION SYSTEMS, IEEE, PISCATAWAY, NJ, USA, vol. 12, no. 2, 1 June 2011 (2011-06-01), pages 476 - 484, XP011325848, ISSN: 1524-9050, DOI: 10.1109/TITS.2010.2095499
- ANCA DISCANT ET AL: "Sensors for Obstacle Detection - A Survey", ELECTRONICS TECHNOLOGY, 30TH INTERNATIONAL SPRING SEMINAR ON, IEEE, PI, 1 May 2007 (2007-05-01), pages 100 - 105, XP031203614, ISBN: 978-1-4244-1217-4
- NEUPANE SAURAV R ET AL: "A heuristics-based method for obtaining road surface type information from mobile lidar for use in network-level infrastructure management", MEASUREMENT, INSTITUTE OF MEASUREMENT AND CONTROL. LONDON, GB, vol. 131, 8 September 2018 (2018-09-08), pages 664 - 670, XP085503442, ISSN: 0263-2241, DOI: 10.1016/J.MEASUREMENT.2018.09.015

## Description

The present invention is directed to a method for determining a color of a substrate being laterally adjacent to a non-elevated surface of a road for an automated vehicle, a control unit being configured to carry out the method and an automated vehicle comprising the control unit.

One challenge with autonomous driving on a road, such as a highway, where at least one side of the road does not have an elevated road boundary, such as a concrete barrier, is to determine where the end of the road is and what kind of substrate comes after the end of the road, i.e. the road boundary/edge.

This might be problematic, since there could be grass, loose soil or snow at the end of the road edge and after that there might be a valley, such as a roadside ditch, and in the worst case, if the vehicle slightly leaves the road, this may lead to an accident where the vehicle drops into the valley.

Concerning the road end, i.e. road-side edge, detection, several methods are described in the state of the art.

For example, US 2010/017060 A1 describes a method for detecting road-side edges in a road segment using a light-based sensing system. Input range data is captured using the light-based sensing system. An elevation-based road segment is generated based on the captured input range data. The elevation-based road segment is processed by filtering techniques to identify the road segment candidate region and by pattern recognition techniques to determine whether the candidate region is a road segment. The input range data is also projected onto the ground plane for further validation. The line representation of the projected points are identified. The line representation of the candidate regions is compared to a simple road/road-edge model in the top-down view to determine whether the candidate region is a road segment with its edges.

However, there is no known device and method for detecting a color of a substrate, optionally in order to determine a nature of the substrate, being laterally adjacent to a non-elevated surface of a road for an automated vehicle, wherein the method provides a certain level of safety integrity such that it might be used in automated driving.

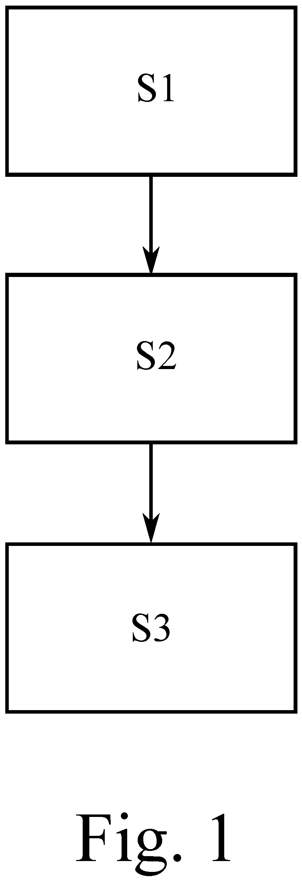

Furthermore, reference is made to ISABELLE TANG ET AL, "Automatic Road Environment Classification", IEEE TRANSACTIONS ON INTELLIGENT TRANSPORTATION SYSTEMS, IEEE, PISCATAWAY, NJ, USA, (20110601), vol. 12, no. 2, doi:10.1109/TITS.2010.2095499, ISSN 1524-9050, pages 476 - 484, XP011325848 [X] 1-6,8,9 * abstract; figure 1 and section II; section III.A and Table I; section IV; section VI 2nd paragraph; figures 6-7 and section V.D * [I] 7, and ANCA DISCANT ET AL, "Sensors for Obstacle Detection - A Survey", ELECTRONICS TECHNOLOGY, 30TH INTERNATIONAL SPRING SEMINAR ON, IEEE, PI, (20070501), ISBN 978-1-4244-1217-4, pages 100 - 105, XP031203614 [A] 4 * section 2.2, 2nd paragraph *.

Against the background of this prior art, one object of the present invention is, inter alia, to provide a device and a method which are suitable for overcoming at least some of the above-mentioned disadvantages of the prior art, respectively.

The object is solved by the features of the independent claims. The dependent claims have preferred further embodiments of the invention as their subject matter.

More specifically, the object is solved by a method for determining a color of a substrate being laterally adjacent to a non-elevated surface of a road for an automated vehicle.

That is, the method may be used, inter alia, in situations where no elevated barriers, such as concrete barriers and/or guide/side rails, are provided at at least one lateral side of the road. In such kind of situations, at the side of the road without the elevated barriers, i.e., the flat side, there might be a smooth changeover between a fortified surface of the road and an unfortified underground next to the road.

The aim of the method is to determine the color of the substrate partly covering the surface in a region at the road end and/or covering or forming a surface of the unfortified underground next to the road. Therefore, the method comprises the following two steps which may be performed after each other or at least partly simultaneously.

The method comprises a step of determining a trajectory being parallel to a given trajectory of a lane of the road and having a predetermined distance to a given lateral end of the road. Thereby, for determining the trajectory, a trajectory at a center of a host lane or center of the vehicle may be used as a reference for the trajectory to be determined.

The method further comprises a step of determining the color of the substrate for at least one point being located on or having a predetermined distance to the determined trajectory.

In other words, a first path corresponding to a curve of the road, especially ahead/in an actual driving direction in front of, the automated vehicle may be used to generate a second, dependent path being located next to a lateral end of the road.

The first path corresponding to the curve of the road may be seen as an input for the method and/or may be generated during the method and is thus called a given trajectory. This given trajectory may be represented by a first spline.

Using this first spline the second, dependent path, here the so called determined trajectory, may be calculated, e.g., by shifting the given trajectory towards and out of the road.

This results in a determined trajectory, also represented by a spline, running in parallel to the given trajectory. To ensure that the determined trajectory is not on but outside/next to the road, a predefined distance, optionally including some tolerances, may be set with respect to the end of the road. One example for the predefined distance to the lateral road end may be 50 cm.

This determined spline/trajectory may be used to determine one or more measurement points for determining the color of the substrate. This measurement point or these measurement points may be set with a predetermined/predefined distance to the vehicle, wherein a length of the determined trajectory limits this distance. One example for the predefined distance to the vehicle may be 50 m.

Thereby a method is provided not only ensuring a determination of a color of the substrate currently/actually lateral to the vehicle but also in front of the vehicle, i.e., where the vehicle will drive in the future, with a required safety integrity.

Thus, a predictive way of determining the color of the substrate being located next to the road without elevated barriers which may be used in automated driving is provided.

The method may comprise determining a nature of the substrate by comparing the determined color with a database, wherein the database comprises colors, optionally green, white and/or grey, that are stored together with corresponding natures, optionally grass, snow and/or loose soil.

That is, a deterministic way for detecting and determining the correct non-elevated surface such as grass, plant or loose soil at the end of the road is provided.

The given trajectory of the lane may correspond to the given lateral end of the road.

In other words, there may be situations where the given trajectory is substantially located at the lateral end of the road.

This is beneficial when a width of the road, optionally a width of the lanes of the road, are not known, because the trajectory running in parallel to the given trajectory and being located outside the road may be determined by simply shifting the given trajectory about the predefined distance to the left or right. Thereby also a needed computing power is limited to a minimum.

However, alternatively or additionally, the given trajectory may be located at the middle of the road/lane and may be shifted about substantially half the width of the road/lane plus the predefined distance to the left or right in order to determine the trajectory.

The method may further comprise a step of determining the given trajectory and/or the given lateral end of the road.

The given trajectory and/or the given lateral end of the road may be determined based on sensor data captured by a LiDAR (Light Detection And Ranging) sensor, a camera and/or a radar sensor, wherein the sensor data corresponds to an environment of the automated vehicle.

More specifically, a multiple perception sensor set-up may be used. Thereby, a front and/or side radar sensor may provide an information if there are any elevated objects, such as obstacles, present at the end of the road.

The LiDAR sensor may provide the road boundaries and/or road markings (e.g., a solid line) as detections. The LiDAR sensor may also provide an information if any object is there in a given/predefined field of view.

The camera as perception sensor may also provide an information if there is a free space, i.e. non presence of elevated obstacles, at the given field of view. The camera may also provide an information about a host lane, i.e., where the automated vehicle is currently driving, about neighboring lanes and/or about the lateral end of the road. The camera may also provide the given trajectory of the road, e.g., the trajectory of the host lane, based on a polynomial/spline calculated at the center of the road/lane.

The determined trajectory may be determined for a predefined range being located in front of the automated vehicle with respect to a driving direction of the automated vehicle.

That is, for example there may be a predefined range or distance in front of the vehicle (called field of view above), e.g., extending 50 meters in front of the vehicle, where the trajectory is determined.

It is possible that multiple measuring points may be located along and on the determined trajectory within the predefined range. It is possible that the colors measured at the multiple measuring points are compared to each other for a plausibility check of the measuring results.

Moreover, the predefined range may be a fixed range or may be variable, e.g., may vary depending on a velocity of the automated vehicle.

Additionally or alternatively, the camera data may be used for the determining of the color of the substrate, wherein the camera data corresponds to an environment of the automated vehicle.

The step of determining the color based on the camera data may comprise measuring a color at the at least one point in at least two, optionally consecutive, frames of the camera data, and determining the color of the substrate based on the measured color of the at least two, optionally consecutive, frames of the camera data.

Measuring the color based on two (optionally consecutive) frames substantially at the same measuring point allows for double/cross-checking and thus for a plausibility check of the measuring results.

The above described may be summarized in a more concrete manner and with other words as follows.

The method may use multiple perception sensors to optionally detect the lateral end of the road, i.e., the edge of the road, or receive this data as input data and determine what could be there after the road end such as grass (e.g., green, pale yellow etc.), snow or loose soil.

The concept takes into consideration the lane trajectory polynomial and calculates one more polynomial (i.e., an algorithm defined spline) parallel to the trajectory (in a driving direction of the vehicle) at least for a predefined distance, e.g., 50m, in front of the vehicle and a predefined distance, e.g., 50cm, outside and away from the lateral road end.

An additional Polynomial could be created at the end of the road based on the lane trajectory polynomial, which could further be used for the correctness of lateral distance from the lateral end of the road.

Multiple measurements in different measuring areas may be taken, wherein the measuring areas or the centers thereof are located along or on the algorithm defined spline/determined trajectory with a distance of at least 50 cm laterally from the lateral end of the road. The distance may be measured in perpendicular to the determined trajectory. The measurement areas may overlap each other to increase the confidence of the measurements.

Additionally or alternatively, the measurement may be taken for multiple frames for a redundancy of information.

In order to optimize the processing power, the measurements could also be taken based on a dotted line, where the lane segment calculations are done on road marking. Same measurements could also be done taking the newly generated algorithm defined spline (Polynom) at the end of road edge.

The method may also take inputs from other perception sensors such as a LiDAR sensor for road marking detection, a radar sensor for a detection of obstacles and/or a camera for a detection of free space along the lateral side of the road to ensure that there are no elevated road boundaries. The LiDAR sensor may also provide an object detection and/or the camera may be used for te lane color detection.

Furthermore, a control unit is provided. The control unit is configured to carry out the above described method The description given above with respect to the method applies mutatis mutandis to the control unit and vice versa.

The control unit may be configured to generate and output, e.g., to the automated vehicle, a control signal based on the determined color of the substrate, optionally based on the determined nature of the substrate.

Furthermore, an automated vehicle, e.g., an automated car, is provided. The automated vehicle comprises the above described control unit. The description given above with respect to the method and the control unit applies mutatis mutandis to the automated vehicle and vice versa.

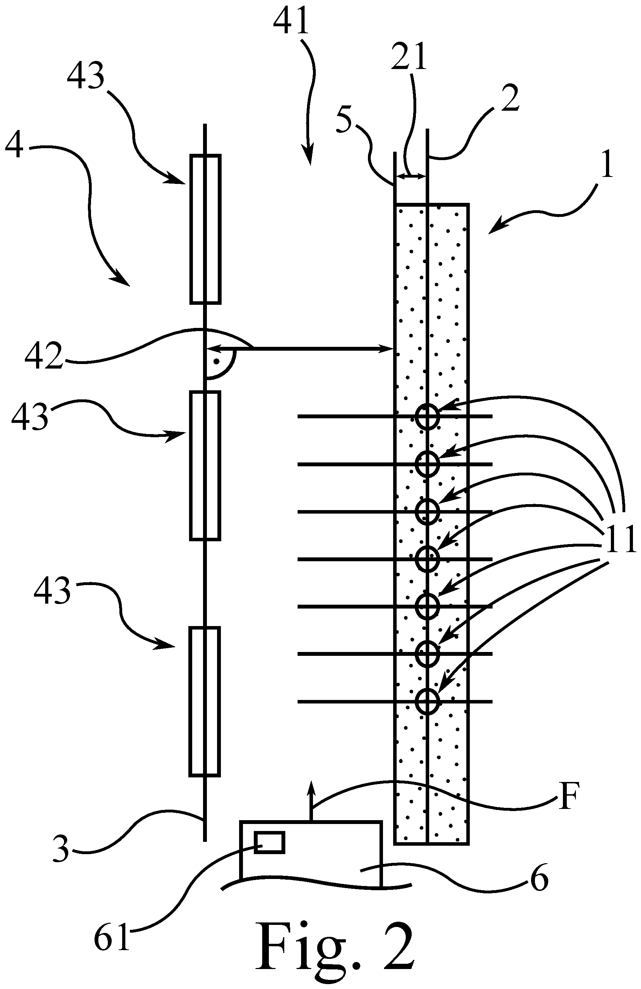

In the following an embodiment is described with respect to figures 1 and 2.
- Fig. 1: depicts schematically a flow chart of a method for determining a color of a substrate being laterally adjacent to a non-elevated surface of a road for an automated vehicle, and
- Fig. 2: depicts schematically a driving situation in which the method of figure 1 may be used.

In the following description the same reference signs are used for the same items, wherein the described embodiment is just one specific example for implementing the invention and it is not intend that this embodiment limits the scope of protection defined by the claims.

As can be gathered from figure 1, the method for determining the color of the substrate 1 (see figure 2) comprises substantially two steps S1, S2 and an optional third step S3 for determining a nature of the substrate 1 based on the determined color.

These three steps S1, S2, S3 will be explained in detail in the following and with respect to the specific driving situation shown in figure 2.

Figure 2 is a top view showing schematically an automated vehicle 6 driving on a (host) lane 41 along a road 4 in a driving direction F.

Next to the road 4, here laterally adjacent to a non-elevated surface of the road 4, the substrate 1 is located. A lateral end 5 of the road 4 is located between the substrate 1 and the road 4, here between a lateral end of the lane 41 and the substrate 1.

The method steps are executed by a control unit 61 being part of the automated vehicle 6, wherein the method is a computer implemented method and the method steps are defined by an algorithm executed by a (not shown) processor of the control unit 61.

The algorithm gets as input data an information about a so-called given trajectory 3 and/or about a so-called lateral end of the road 5.

More specifically, the given trajectory 3 may be defined by a spline wherein the information used by the algorithm comprises a position of the spline with respect to the automated vehicle 6.

The given lateral end 5 of the road 4, which is the same as the lateral end of the lane 41 in the present case, may be provided as a distance 42 from the given trajectory 3 to the lateral end 5 measured perpendicular to the given trajectory 3. In the present case, the given trajectory 3 passes through a lane marking 43 opposite to the lateral road end 5 and the distance 42 is equal to a width of the lane 41.

However, it would also be possible that the method further comprises an initial step of determining the given trajectory 3, wherein the given trajectory 3 is determined based on sensor data captured by a LiDAR sensor, a camera and/or a radar sensor, and the given lateral end 5 of the road 4 may be determined based on the determined given trajectory 3. The sensor data corresponds to an environment of the automated vehicle 6.

Moreover, it is also possible (but not shown) that the given trajectory 3 is passing through a lane marking on the side where the substrate 1 is located, i.e., the given trajectory 3 of the lane 41 corresponds to the given lateral end 5 of the road 4. Then, the distance 42 would be equal to zero, i.e., the given trajectory 3 and the given lateral end of the road 4 would be the same.

In a first step S1 of the method, a trajectory 2 is determined which is parallel to the given trajectory 3 of the lane 41 of the road 4 and has a predetermined distance 21 to the given lateral end 5 of the road 4.

Determining the trajectory 2 might be done by building a sum out of the predetermined distance 21, here 50 cm, and the distance 42 and shifting the given trajectory 3 (here) to the right about a distance being equal to the built sum.

Additionally or alternatively, the trajectory 2 could be created based on reference of a spline/polynom or trajectory at a center of the host lane 41 with respect to the vehicle 6.

Furthermore, the determined trajectory 2 is determined for a predefined range, here 50 m, being located in front of the automated vehicle 6 with respect to the driving direction F of the automated vehicle 6.

In a second step S2 of the method, the color of the substrate 1 is determined for at least one point being located on or having a predetermined distance to the determined trajectory 2.

More concretely, as can be gathered from figure 2 multiple measuring areas 11 with a predefined size are determined, here having a round shape, wherein a center point of each one of the measuring areas 11 is located on the determined trajectory 2.

Camera data corresponding to the environment of the automated vehicle 6 is used for the determining of the color of the substrate 1, wherein the color is determined by measuring a color of multiple pixels of the camera data within each one of the measuring areas 11.

The measuring results of the respective measuring areas 11 may be compared to each other and thus it is possible to check if they are plausible.

Moreover, this is not only done for one frame of the camera data, i.e., one picture taken at one point in time, but measuring the color at the at least one point is done using at least two, here consecutive, frames of the camera data, i.e., two pictures taken at two consecutive points in time.

The color of the substrate 1 is then determined based on the measured color of the at least two frames of the camera data.

In the optional third step S3, the nature of the substrate 1 is determined by using a database. The database may be stored in the control unit 61.

The database comprises colors, here green, white and grey, and the colors are stored together with corresponding natures, here grass (together with green), snow (together with white), and loose soil (together with grey), such that the nature of the substrate 1 is determined by comparing the determined color with the colors stored in the database.

It is possible that the control unit 61 is configured to output a control signal based on the determined nature of the substrate 1, e.g., such that the vehicle 6 outputs a warning signal and/or a take-over-request to a driver of the automated vehicle 6 and/or automatically lowers a velocity of the automated vehicle 6 when a predefined nature, such as snow, grass and/or loose soil is determined.

### Reference signs

- 1: substrate
- 11: measuring area
- 2: determined trajectory
- 21: predetermined distance to the lateral end of the road
- 3: given trajectory
- 4: road
- 41: lane
- 42: distance of the lateral end of the road to the given trajectory
- 43: lane marking
- 5: lateral end of the road
- 6: automated vehicle
- 61: control unit
- F: driving direction
- S1, S2, S3: steps of the method

## Claims

1. A method for determining a color of a substrate (1) being laterally adjacent to a non-elevated surface of a road (4) for an automated vehicle (6), **characterized in that** the method comprises:
- determining (S1) a trajectory (2) being parallel to a given trajectory (3) of a lane (41) of the road (4) and having a predetermined distance (21) to a given lateral end (5) of the road (4), and
- determining (S2) the color of the substrate (1) for at least one point being located on or having a predetermined distance to the determined trajectory (2).

2. The method according to claim 1, **characterized in that:**
- the method comprises determining (S3) a nature of the substrate (1) by comparing the determined color with a database,
- wherein the database comprises colors, optionally green, white and/or grey, that are stored together with corresponding natures, optionally grass, snow and/or loose soil.

3. The method according to claim 1 or 2, **characterized in that** the given trajectory (3) of the lane (41) corresponds to the given lateral end (5) of the road (4).

4. The method according to any of claims 1 to 3, **characterized in that:**
- the method further comprises determining the given trajectory (3) and/or the given lateral end (5) of the road (4),
- wherein the given trajectory (3) and/or the given lateral end (5) of the road (4) is determined based on sensor data captured by a LiDAR sensor, a camera and/or a radar sensor, wherein the sensor data corresponds to an environment of the automated vehicle (6).

5. The method according to any of claims 1 to 4, **characterized in that** the determined trajectory (2) is determined for a predefined range being located in front of the automated vehicle (6) with respect to a driving direction (F) of the automated vehicle (6).

6. The method according to any of claims 1 to 5, **characterized in that** camera data is used for the determining of the color of the substrate (1), wherein the camera data corresponds to an environment of the automated vehicle (6).

7. The method according to claim 6, **characterized in that** determining the color based on the camera data comprises:
- measuring a color at the at least one point in at least two, optionally consecutive, frames of the camera data, and
- determining the color of the substrate based on the measured color of the at least two, optionally consecutive, frames of the camera data.

8. A control unit (61), **characterized in that** the control unit (61) is configured to carry out the method according to any of claims 1 to 7.

9. An automated vehicle (6), **characterized in that** the automated vehicle (6) comprises the control unit (61) according to claim 8.

## Patentansprüche

1. Verfahren zur Bestimmung einer Farbe eines Untergrunds (1), das seitlich an eine nicht erhöhte Oberfläche einer Straße (4) angrenzt, für ein automatisiertes Fahrzeug (6), **dadurch gekennzeichnet, dass** das Verfahren umfasst:
Bestimmen (S1) einer Trajektorie (2), die parallel zu einer bestimmten Trajektorie (3) einer Fahrbahn (41) der Straße (4) verläuft und einen vorbestimmten Abstand (21) zu einem bestimmten seitlichen Ende (5) der Straße (4) aufweist, und
Bestimmen (S2) der Farbe des Untergrunds (1) für mindestens einen Punkt, der sich auf der bestimmten Trajektorie (2) befindet oder einen vorbestimmten Abstand zu ihr hat.

2. Verfahren nach Anspruch 1, **dadurch gekennzeichnet, dass**:
das Verfahren das Bestimmen (S3) einer Beschaffenheit des Untergrunds (1) durch Vergleichen der ermittelten Farbe mit einer Datenbank umfasst,
wobei die Datenbank Farben, optional Grün, Weiß und/oder Grau, umfasst, die zusammen mit entsprechenden Naturen, optional Gras, Schnee und/oder lockerem Boden, gespeichert werden.

3. Verfahren nach Anspruch 1 oder 2, **dadurch gekennzeichnet, dass** die jeweilige Trajektorie (3) der Fahrbahn (41) dem jeweiligen seitlichen Ende (5) der Straße (4) entspricht.

4. Verfahren nach einem der Ansprüche 1 bis 3, **dadurch gekennzeichnet, dass**:
das Verfahren weiter das Bestimmen der jeweiligen Trajektorie (3) und/oder des jeweiligen seitlichen Endes (5) der Straße (4) umfasst,
wobei die jeweilige Trajektorie (3) und/oder das jeweilige seitliche Ende (5) der Straße (4) auf der Grundlage von Sensordaten bestimmt werden, die von einem LiDAR-Sensor, einer Kamera und/oder einem Radarsensor erfasst wurden, wobei die Sensordaten einer Umgebung des automatisierten Fahrzeugs (6) entsprechen.

5. Verfahren nach einem der Ansprüche 1 bis 4, **dadurch gekennzeichnet, dass** die ermittelte Trajektorie (2) für einen vordefinierten Bereich bestimmt wird, der sich in Bezug auf eine Fahrtrichtung (F) des automatisierten Fahrzeugs (6) vor dem automatisierten Fahrzeug (6) befindet.

6. Verfahren nach einem der Ansprüche 1 bis 5, **dadurch gekennzeichnet, dass** Kameradaten zur Bestimmung der Farbe des Untergrunds (1) verwendet werden, wobei die Kameradaten einer Umgebung des automatisierten Fahrzeugs (6) entsprechen.

7. Das Verfahren nach Anspruch 6, **dadurch gekennzeichnet, dass** die Bestimmung der Farbe anhand der Kameradaten umfasst:
Messen einer Farbe an dem mindestens einen Punkt in mindestens zwei, optional aufeinanderfolgenden, Bildern der Kameradaten, und
Bestimmen der Farbe des Untergrunds auf der Grundlage der gemessenen Farbe der mindestens zwei, optional aufeinanderfolgenden, Bilder der Kameradaten.

8. Steuereinheit (61), **dadurch gekennzeichnet, dass** die Steuereinheit (61) dazu eingerichtet ist, das Verfahren nach einem der Ansprüche 1 bis 7 durchzuführen.

9. Automatisiertes Fahrzeug (6), **dadurch gekennzeichnet, dass** das automatisierte Fahrzeug (6) die Steuereinheit (61) gemäß Anspruch 8 umfasst.

## Revendications

1. Procédé de détermination de la couleur d'un substrat (1) adjacent latéralement à une surface non surélevée d'une route (4) pour un véhicule automatisé (6), **caractérisé en ce que** le procédé comprend les étapes suivantes :
déterminer (S1) une trajectoire (2) parallèle à une trajectoire donnée (3) d'une voie (41) de la route (4) et ayant une distance prédéterminée (21) par rapport à une extrémité latérale donnée (5) de la route (4), et
déterminer (S2) la couleur du substrat (1) pour au moins un point situé sur ou ayant une distance prédéterminée par rapport à la trajectoire déterminée (2).

2. Procédé selon la revendication 1, **caractérisé en ce que** :
le procédé comprend déterminer (S3) la nature du substrat (1) en comparant la couleur déterminée avec une base de données,
dans laquelle la base de données comprend des couleurs, éventuellement le vert, le blanc et/ou le gris, qui sont stockées avec les natures correspondantes, éventuellement de l'herbe, de la neige et/ou de la terre meuble.

3. Procédé selon la revendication 1 ou 2, **caractérisé en ce que** la trajectoire donnée (3) de la voie (41) correspond à l'extrémité latérale donnée (5) de la route (4).

4. Procédé selon l'une quelconque des revendications 1 à 3, **caractérisé en ce que** :
le procédé comprend en outre déterminer la trajectoire donnée (3) et/ou l'extrémité latérale donnée (5) de la route (4),
dans lequel la trajectoire donnée (3) et/ou l'extrémité latérale donnée (5) de la route (4) sont déterminées sur la base de données de capteur capturées par un capteur LiDAR, une caméra et/ou un capteur radar, les données du capteur correspondant à un environnement du véhicule automatisé (6).

5. Procédé selon l'une quelconque des revendications 1 à 4, **caractérisé en ce que** la trajectoire déterminée (2) est déterminée pour une distance prédéfinie située devant le véhicule automatisé (6) par rapport à une direction de conduite (F) du véhicule automatisé (6).

6. Procédé selon l'une quelconque des revendications 1 à 5, **caractérisé en ce que** les données de caméra sont utilisées pour déterminer la couleur du substrat (1), les données de caméra correspondant à un environnement du véhicule automatisé (6).

7. Le procédé selon la revendication 6, **caractérisé en ce que** la détermination de la couleur sur la base des données de la caméra comprend :
mesurer une couleur en au moins un point dans au moins deux images, éventuellement consécutives, des données de caméra, et
déterminer la couleur du substrat sur la base de la couleur mesurée des au moins deux images, éventuellement consécutives, des données de caméra.

8. Une unité de commande (61), **caractérisée en ce que** l'unité de commande (61) est configurée pour exécuter le procédé conformément à l'une des revendications 1 à 7.

9. Véhicule automatisé (6), **caractérisé en ce que** le véhicule automatisé (6) comprend l'unité de commande (61) selon la revendication 8.
